# EUROPEAN PATENT APPLICATION

(11) **EP 4 672 706 A1**
(43) Date of publication of application: **31.12.2025**
(21) Application number: 23930138.5
(22) Date of filing: 26.12.2023
(51) Int. Cl.: H04L 45/24

(54) **MESSAGE TRANSMISSION METHOD AND APPARATUS, NODE DEVICE, AND COMMUNICATION SYSTEM**

(30) Priority: 29.03.2023 CN 202310359063
(71) Applicant: Huawei Technologies Co., Ltd., Shenzhen, Guangdong 518129 (CN)
(72) Inventor: LIU, Rongguo, Shenzhen, Guangdong 518129 (CN); HAN, Zhaojiao, Shenzhen, Guangdong 518129 (CN); CHENG, Chuanning, Shenzhen, Guangdong 518129 (CN); FANG, Ping, Shenzhen, Guangdong 518129 (CN)
(74) Representative: Huawei European IPR
(86) International application number: PCT/CN2023/142039
(87) International publication number: WO 2024/198575

(57) **Abstract**

This application discloses a packet transmission method and apparatus, a node device, and a communication system, and relates to the field of communication technologies. The packet transmission method may be applied to a first node device in the communication system. The first node device includes a plurality of network ports. When sending a first packet, the first node device may determine a device-level port identifier of a target node device of the first packet, determine, based on the device-level port identifier of the target node device, a target egress port of the first packet from the plurality of network ports, and send the first packet through the target egress port of the first packet. The target egress port of the first packet is a network port with a path reachable to a device-level port of the target node device. In the foregoing process, the plurality of network ports participate in a path selection mechanism, so that multi-path communication can be implemented, bandwidth loads of the plurality of network ports can be balanced, communication efficiency can be improved, and communication performance can be improved.

## Description

### CROSS-REFERENCE TO RELATED APPLICATIONS

This application claims priority to Chinese Patent Application No. 202310359063.5, filed with the China National Intellectual Property Administration on March 29, 2023 and entitled "PACKET TRANSMISSION METHOD AND APPARATUS, NODE DEVICE, AND COMMUNICATION SYSTEM", which is incorporated herein by reference in its entirety.

### TECHNICAL FIELD

This application relates to the field of communication technologies, and in particular, to a packet transmission method and apparatus, a node device, and a communication system.

### BACKGROUND

A communication system usually includes a plurality of node devices connected in a wired manner or a wireless manner, and data transmission may be performed between different node devices according to a specified network protocol.

In a current communication system, each node device is provided with a network port. When two node devices communicate with each other, single-path communication is performed through network ports disposed on the two node devices. For example, when a first node device communicates with a second node device, single-path communication is performed between a network port disposed on the first node device and a network port disposed on the second node device.

As communication requirements continuously increase, an amount of data that needs to be transmitted in a communication process also gradually increases. When a large amount of data needs to be transmitted, bandwidth load pressure of single-path communication is high, and communication performance is affected.

### SUMMARY

Embodiments of this application provide a packet transmission method and apparatus, a node device, and a communication system, to implement multi-path communication and improve communication performance.

According to a first aspect, an embodiment of this application provides a packet transmission method. The packet transmission method may be performed by a first node device in a serial bus communication system, and the serial bus communication system includes a plurality of node devices. The first node device may be any one of the plurality of node devices, and the first node device is configured to send a first packet to a target node device. The first node device may be a source node device of the first packet, or may be a switch or a switching device configured to forward the first packet. The first node device and the target node device each include one device-level port and a plurality of network ports. There is a binding relationship between the device-level port of the target node device and the plurality of network ports of the target node device. The packet transmission method may include: The first node device determines a device-level port identifier of the target node device of the first packet, determines, based on the device-level port identifier of the target node device, a target egress port of the first packet from the plurality of network ports of the first node device, and sends the first packet through the target egress port of the first packet. The target egress port of the first packet is a network port with a path reachable to the device-level port of the target node device.

According to the packet transmission method provided in this embodiment of this application, the first node device includes the plurality of network ports. When sending the first packet, the first node device may determine the device-level port identifier of the target node device of the first packet, and determine, based on the device-level port identifier of the target node device, the target egress port of the first packet from the plurality of network ports. In the foregoing process, the target egress port is selected from the plurality of network ports based on the device-level port identifier of the node device, and the plurality of network ports participate in a path selection mechanism, so that multi-path communication can be implemented, bandwidth loads of the plurality of network ports can be balanced, communication efficiency can be improved, and communication performance can be improved. In addition, there is the binding relationship between the device-level port of the target node device and the plurality of network ports of the target node device. Based on this, the first node device may store only path reachability information between the network port of the first node device and a device-level port of another node device. When the first node device selects the target egress port from the plurality of network ports, a small amount of data needs to be traversed, so that computing resources of the node device can be reduced.

In a possible implementation, the first node device stores a routing table, and the routing table stores path reachability information between the plurality of network ports of the first node device and device-level ports of the plurality of node devices in the serial bus communication system. The first node device may search, based on the device-level port identifier of the target node device, the routing table for a corresponding candidate network port with a path reachable to the device-level port of the target node device, and determine the target egress port of the first packet from the candidate network port.

In the foregoing implementation, the first node device does not need to store information about a network port of another node device other than the first node device, and does not need to maintain a large quantity of path reachability pairs between network ports, and the first node device stores only the path reachability information between the network port of the first node device and the device-level port of the another node device. Therefore, an amount of data stored in the routing table in the node device is small. This can reduce storage space, and reduce maintenance resources of the path reachability pairs.

In a possible implementation, each of the plurality of network ports of the first node device has a port identifier, and the routing table may include a bit table. Each row of the bit table corresponds to a port identifier of one network port, and each column corresponds to a device-level port identifier of one node device; or each row of the bit table corresponds to a device-level port identifier of one node device, and each column corresponds to a port identifier of one network port. Each bit in the bit table indicates path reachability information between one network port and a device-level port of one node device.

In the foregoing implementation, the path reachability information between the network port and the device-level port of the node device is stored by using the bit table. This can effectively reduce an amount of stored data, and reduce storage space.

In a possible implementation, the routing table further includes a default bit table, and each bit in the default bit table indicates path reachability information between a network port of the first node device and a device-level port that is of a node device and whose device-level port identifier is not included in the routing table. If the device-level port identifier of the target node device is not found in the routing table, the first node device may determine, based on the default bit table in the routing table, the corresponding candidate network port with the path reachable to the device-level port of the target node device.

In the foregoing implementation, the device-level port identifier of the node device is omitted in the default bit table, and path reachability information between a network port and the device-level ports of the plurality of node devices may be simultaneously recorded in the routing table by using the default bit table. This further reduces storage space of the node device, and further reduces computing resources consumed when the node device selects the target egress port.

In a possible implementation, if a plurality of candidate network ports are included, the first node device selects at least one candidate network port from the plurality of candidate network ports as the target egress port of the first packet based on load information of the plurality of candidate network ports.

In the foregoing implementation, when the plurality of candidate network ports are included, the target egress port is selected from the plurality of candidate network ports based on the load information of the plurality of candidate network ports. This helps implement load balancing between the network ports.

In a possible implementation, after searching the routing table for the corresponding candidate network port with the path reachable to the device-level port of the target node device, the first node device may control, based on congestion information of the candidate network port, a frequency of sending a packet to the target node device, to reduce network congestion and improve data reachability.

In a possible implementation, if a plurality of target egress ports of the first packet are included, and a length of the first packet is greater than a specified length, the first node device may split the first packet into a plurality of packets, and separately send the plurality of split packets to the target node device through the plurality of target egress ports.

In the foregoing implementation, the first packet may be jointly sent through the plurality of target egress ports, to implement multi-path load sharing, effectively use bandwidths of the plurality of network ports, further balance loads of the plurality of network ports, and improve communication efficiency and communication performance.

In a possible implementation, the first packet carries a device-level port identifier of a source node device and the device-level port identifier of the target node device. The device-level port identifier of the target node device indicates, to a node device that forwards the first packet, the target node device of the first packet, and the device-level port identifier of the source node device indicates, to the target node device, the source node device that sends the first packet.

In a possible implementation, after sending the first packet through the target egress port of the first packet, the first node device may further receive a response packet that is for the first packet and that is sent by the target node device. The response packet is sent by the target node device through a packet egress port of the response packet, the packet egress port of the response packet is determined by the target node device from the plurality of network ports included in the target node device based on the device-level port identifier of the source node device in the first packet, and the device-level port identifier of the target node device carried in the response packet is the device-level port identifier of the source node device in the first packet.

In the foregoing implementation, the packet carries the device-level port identifier of the source node device and the device-level port identifier of the target node device, instead of carrying the port identifier of the network port, so that a plurality of network ports of the source node device that sends the packet and the plurality of network ports of the target node device that receives the packet can be effectively used, to implement a multi-path selection mechanism and multi-path communication.

According to a second aspect, an embodiment of this application provides a packet transmission method. The packet transmission method may be applied to a serial bus communication system. The serial bus communication system includes a plurality of node devices, and a first node device in the plurality of node devices is configured to send a first packet to a target node device. The first node device and the target node device each include one device-level port and a plurality of network ports, and there is a binding relationship between the device-level port of the target node device and the plurality of network ports of the target node device. The method includes:

The first node device determines a device-level port identifier of the target node device of the first packet, where the first node device is any node device in the plurality of node devices;
the first node device determines a target egress port of the first packet from the plurality of network ports of the first node device based on the device-level port identifier of the target node device, and sends the first packet to the target node device through the target egress port, where the target egress port of the first packet is a network port with a path reachable to the device-level port of the target node device, and the first packet carries a device-level port identifier of a source node device; and
the target node device determines, based on the device-level port identifier of the source node device in the first packet, a packet egress port of a response packet for the first packet from the plurality of network ports included in the target node device, and sends the response packet through the packet egress port of the response packet.

In a possible implementation, that the first node device determines the target egress port of the first packet from the plurality of network ports of the first node device based on the device-level port identifier of the target node device includes:

The first node device searches, based on the device-level port identifier of the target node device, a routing table for a corresponding candidate network port with a path reachable to the device-level port of the target node device, where the routing table stores path reachability information between the plurality of network ports of the first node device and device-level ports of the plurality of node devices in the serial bus communication system; and
the first node device determines the target egress port of the first packet from the candidate network port.

In a possible implementation, each of the plurality of network ports of the first node device has a port identifier;
the routing table includes a bit table, where each row of the bit table corresponds to a port identifier of one network port, and each column corresponds to a device-level port identifier of one node device; or each row of the bit table corresponds to a device-level port identifier of one node device, and each column corresponds to a port identifier of one network port; and
each bit in the bit table indicates path reachability information between one network port and a device-level port of one node device.

In a possible implementation, the routing table further includes a default bit table, and each bit in the default bit table indicates path reachability information between a network port of the first node device and a device-level port that is of a node device and whose device-level port identifier is not included in the routing table. That the first node device searches, based on the device-level port identifier of the target node device, the routing table for the corresponding candidate network port with the path reachable to the device-level port of the target node device includes:

If the first node device does not find the device-level port identifier of the target node device in the routing table, the first node device determines, based on the default bit table in the routing table, the corresponding candidate network port with the path reachable to the device-level port of the target node device.

In a possible implementation, that the first node device determines the target egress port of the first packet from the candidate network port includes:

If a plurality of candidate network ports are included, the first node device selects at least one candidate network port from the plurality of candidate network ports as the target egress port of the first packet based on load information of the plurality of candidate network ports.

In a possible implementation, the method may further include:

After the first node device searches the routing table for the corresponding candidate network port with the path reachable to the device-level port of the target node device, the first node device controls, based on congestion information of the candidate network port, a frequency of sending a packet to the target node device.

In a possible implementation, that the first node device sends the first packet to the target node device through the target egress port of the first packet includes:

If a plurality of target egress ports of the first packet are included, and a length of the first packet is greater than a specified length, the first node device splits the first packet into a plurality of packets; and separately sends the plurality of packets to the target node device through the plurality of target egress ports.

According to a third aspect, an embodiment of this application provides a packet transmission apparatus, used in a first node device. The first node device is one of a plurality of node devices included in a serial bus communication system, and the first node device is configured to send a first packet to a target node device. The first node device and the target node device each include one device-level port and a plurality of network ports, and there is a binding relationship between the device-level port of the target node device and the plurality of network ports of the target node device. The apparatus includes:
a port determining unit, configured to: determine a device-level port identifier of the target node device of the first packet; and determine a target egress port of the first packet from the plurality of network ports of the first node device based on the device-level port identifier of the target node device, where the target egress port of the first packet is a network port with a path reachable to the device-level port of the target node device; and
a packet sending unit, configured to send the first packet through the target egress port of the first packet.

In a possible implementation, the port determining unit is specifically configured to:
search, based on the device-level port identifier of the target node device, a routing table for a corresponding candidate network port with a path reachable to the device-level port of the target node device, where the routing table stores path reachability information between the plurality of network ports of the first node device and device-level ports of the plurality of node devices in the serial bus communication system; and
determine the target egress port of the first packet from the candidate network port.

In a possible implementation, each of the plurality of network ports of the first node device has a port identifier;
the routing table includes a bit table, where each row of the bit table corresponds to a port identifier of one network port, and each column corresponds to a device-level port identifier of one node device; or each row of the bit table corresponds to a device-level port identifier of one node device, and each column corresponds to a port identifier of one network port; and
each bit in the bit table indicates path reachability information between one network port and a device-level port of one node device.

In a possible implementation, the routing table further includes a default bit table, and each bit in the default bit table indicates path reachability information between a network port of the first node device and a device-level port that is of a node device and whose device-level port identifier is not included in the routing table. The port determining unit may be specifically configured to:
if the device-level port identifier of the target node device is not found in the routing table, determine, based on the default bit table in the routing table, the corresponding candidate network port with the path reachable to the device-level port of the target node device.

In a possible implementation, the port determining unit may be specifically configured to:
if a plurality of candidate network ports are included, select at least one candidate network port from the plurality of candidate network ports as the target egress port of the first packet based on load information of the plurality of candidate network ports.

In a possible implementation, the port determining unit may be further configured to:
after searching the routing table for the corresponding candidate network port with the path reachable to the device-level port of the target node device, control, based on congestion information of the candidate network port, a frequency of sending a packet to the target node device.

In a possible implementation, the packet sending unit may be specifically configured to:
if a plurality of target egress ports of the first packet are included, and a length of the first packet is greater than a specified length, split the first packet into a plurality of packets; and
separately send the plurality of packets to the target node device through the plurality of target egress ports.

In a possible implementation, the first packet carries a device-level port identifier of a source node device and the device-level port identifier of the target node device. The device-level port identifier of the target node device indicates, to a node device that forwards the first packet, the target node device of the first packet, and the device-level port identifier of the source node device indicates, to the target node device, the source node device that sends the first packet.

In a possible implementation, the packet transmission apparatus may further include a packet receiving unit, where
the packet receiving unit is configured to receive a response packet that is for the first packet and that is sent by the target node device, where the response packet is sent by the target node device through a packet egress port of the response packet, the packet egress port of the response packet is determined by the target node device from the plurality of network ports included in the target node device based on the device-level port identifier of the source node device in the first packet, and the device-level port identifier of the target node device carried in the response packet is the device-level port identifier of the source node device in the first packet.

According to a fourth aspect, an embodiment of this application provides a node device, including a memory and a processor. The memory stores a computer program that can run on the processor, and when the computer program is executed by the processor, the processor is caused to implement any method provided in the first aspect.

According to a fifth aspect, an embodiment of this application provides a communication system, including a plurality of node devices, where the node device is the node device provided in the fourth aspect.

According to a sixth aspect, an embodiment of this application provides a computer-readable storage medium. The computer-readable storage medium stores computer-executable instructions, and the computer-executable instructions are used to enable a computer to perform any method provided in the first aspect.

According to a seventh aspect, an embodiment of this application provides a computer program product, including computer-executable instructions. The computer-executable instructions are used to enable a computer to perform any method provided in the first aspect.

For technical effect that can be achieved in any one of the second aspect to the seventh aspect, refer to descriptions of beneficial effect in the first aspect. Details are not described herein again.

### BRIEF DESCRIPTION OF DRAWINGS

FIG. 1 is a diagram of a structure of a communication system according to an embodiment of this application;
FIG. 2 is a diagram of a structure of another communication system according to an embodiment of this application;
FIG. 3 is a diagram of a structure of a node device according to an embodiment of this application;
FIG. 4 is an interaction flowchart of a packet transmission method according to an embodiment of this application;
FIG. 5 is a diagram of a packet header according to an embodiment of this application;
FIG. 6 is a flowchart of a packet transmission method according to an embodiment of this application;
FIG. 7 is a block diagram of a structure of a packet transmission apparatus according to an embodiment of this application;
FIG. 8 is a block diagram of a structure of another packet transmission apparatus according to an embodiment of this application; and
FIG. 9 is a diagram of a structure of another node device according to an embodiment of this application.

### DESCRIPTION OF EMBODIMENTS

To make objectives, technical solutions, and advantages of embodiments of this application clearer, the following describes embodiments of this application in detail with reference to accompanying drawings. Terms used in implementations of this application are merely used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are explained and described, to facilitate understanding by a person skilled in the art, but not to limit the terms in this application.
(1) Unified bus (unified bus, UB) communication system: The unified bus communication system may also be referred to as a community local area network (community local area network, Clan) communication network or a Clan domain (domain) network, and is a small-scale local area network. Packet transmission may be directly performed between node devices in the UB communication system, or by using a switching device.
(2) SerDes-based communication system: SerDes is short for serializer (SERializer)/deserializer (DESerializer), and is a time division multiplexing and point-to-point serial communication technology. In the communication system, a plurality of low-speed parallel signals are converted into high-speed serial signals at a transmitter, the high-speed serial signals arrive at a receiver through a transmission medium (an optical cable or a copper wire), and the high-speed serial signals are re-converted into the low-speed parallel signals at the receiver.

In embodiments of this application, "a plurality of" means two or more. In view of this, in embodiments of this application, "a plurality of' may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/", unless otherwise specified, generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

To improve communication performance, an embodiment of this application provides a packet transmission method. The method may be applied to a serial bus communication system like a high-speed serial bus communication system, a UB communication system, a SerDes-based communication system, and the like. The method may be performed by a node device in the communication system, and the node device may include a plurality of network ports. The node device is configured to send a first packet to a target node device, where the node device and the target node device each include a device-level port and a plurality of network ports. There is a binding relationship between the device-level port of the target node device and the plurality of network ports of the target node device. The node device determines a device-level port identifier of the target node device of the first packet, determines, based on the device-level port identifier of the target node device, a target egress port of the first packet from the plurality of network ports of the node device, and sends the first packet through the target egress port of the first packet. The target egress port of the first packet is a network port with a path reachable to the device-level port of the target node device. In this process, the plurality of network ports participate in a path selection mechanism, so that multi-path communication can be implemented, bandwidth loads of the plurality of network ports can be balanced, communication efficiency can be improved, and communication performance can be improved.

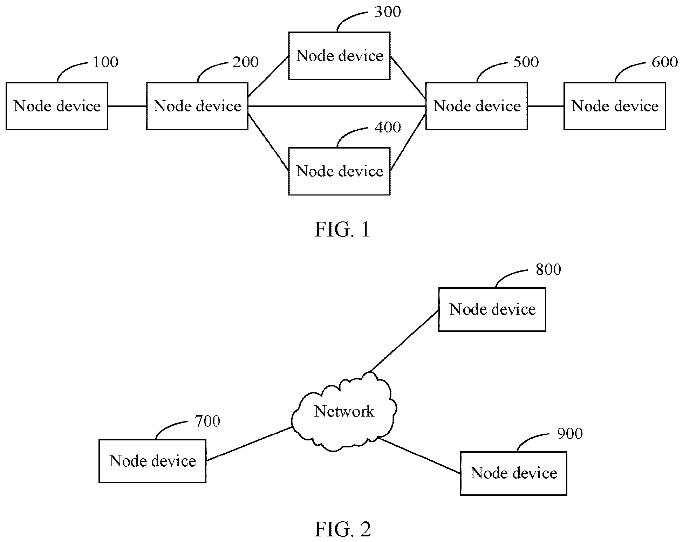

The packet transmission method provided in this embodiment of this application may be applied to a communication system shown in FIG. 1 or FIG. 2. The communication system shown in FIG. 1 or FIG. 2 may be understood as a UB communication system. The communication system may include a plurality of node devices, and the node device may also be referred to as an end node (end node). The communication system shown in FIG. 1 or FIG. 2 may also be understood as a server cluster. The node device in the communication system may be a server in the server cluster, or may be a network interface card or a communication chip installed in the server.

FIG. 1 shows an example of a node device 100 and a node device 600. The node device 100 and the node device 600 may be communicatively connected to each other through a plurality of node devices. As shown in FIG. 1, the node device 100 is connected to the node device 600 through a node device 200, a node device 300, a node device 400, and a node device 500. The node device 200, the node device 300, the node device 400, and the node device 500 may be switches (switch) or switching devices, and are configured to forward a packet. In another embodiment, the node devices may be connected through more or fewer switches. FIG. 2 shows an example of three node devices: a node device 700, a node device 800, and a node device 900. Different node devices are connected through a network, and the network may also be referred to as an internal interconnect network (interconnect network).

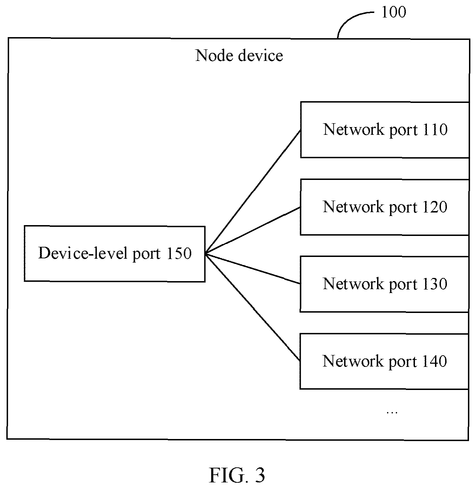

FIG. 3 is an example of a diagram of a structure of a node device 100. A structure of any node device in a UB communication system may be shown in FIG. 3. The node device 100 includes a plurality of network ports (ports), for example, a network port 110, a network port 120, a network port 130, and a network port 140 that are shown in FIG. 3. The plurality of network ports serve the same node device. The node device 100 further includes a device-level port 150. There is a binding relationship between the network port 110, the network port 120, the network port 130, and the network port 140 and the device-level port 150. Different node devices in the UB communication system may be provided with different quantities of network ports, and a part of node devices each may alternatively be provided with only one network port.

The node device may be understood as a network element in the UB communication system, and may be an electronic device like a physical machine, a computer, or a server. The node device may include a virtual resource object like a virtual machine or an application. The plurality of network ports may jointly serve a same resource object. For example, the resource object may be a function entity (function entity, FE), and the FE is a network element with a minimum granularity that can be addressed in the UB communication system. For example, one node device may include a plurality of FEs. For example, the node device may include three function entities: an FE 0, an FE 1, and an FE 2, and two network ports: a port 0 and a port 1. Each function entity may be bound to the two network ports: the port 0 and the port 1.

In the UB communication system, each node device has a device-level port, and the device-level port has a device-level port identifier. The device-level port identifier may be allocated by a fabric management network element (UB fabric management, UFM) in the UB communication system to the device-level port of each node device that accesses the UB communication system. The device-level port identifier is used to identify a network address of the device-level port of the node device in the communication system, and may also be referred to as a Clan network address (clan network address, CNA). The CNA of the device-level port of each node device is unique in the UB communication system, and is used for addressing when a switch forwards a packet. As a node device, the switch in the UB communication system also has a device-level port identifier CNA used for unique identification. For example, if the node device is an FE, an entity identity (entity identity, EID) may alternatively be used as the device-level port identifier.

One node device may include one or more network ports, and the network port may be referred to as a Clan network interface (clan network interface, CNI). There is a binding relationship between a plurality of network ports of a node device and a device-level port of the node device. Each network port has a port identifier. The port identifiers may alternatively be uniformly allocated by the UFM in the UB communication system. The port identifier of each network port is unique in the UB communication system, and is used to identify a network address of the network port. The port identifier may also be referred to as a port address (port address).

If one node device has one network port, a port identifier of the network port may be the same as or different from a device-level port identifier of the node device. If one node device has a plurality of network ports, and each network port has a different port identifier, a port identifier of any network port is different from a device-level port identifier of the node device. For example, the device-level port identifier of the node device may be used as a primary CNA (primary CNA), and the port identifier of each network port of the node device may be used as a secondary CNA (secondary CNA or secondary CNI). For example, for the node device 100 shown in FIG. 3, the UFM allocates a device-level port identifier to the node device 100. The device-level port identifier may be a primary CNA CNA0, and is used to identify a logical location of the node device 100 in the communication system. The UFM further allocates one port identifier to each network port of the node device 100, and the port identifier is used to identify a logical location of the network port in the communication system. A port identifier of the network port 110 may be CNI1, a port identifier of the network port 120 may be CNI2, a port identifier of the network port 130 may be CNI3, and a port identifier of the network port 140 may be CNI4. CNI1, CNI2, CNI3, and CNI4 are secondary CNAs. CNA0, CNI1, CNI2, CNI3, and CNI4 each may be a 16-bit (bit) CNA.

In the UB communication system, each node device stores a routing table (routing table). In a packet transmission process, a source node device that sends a packet does not need to pay attention to a packet input port of a target node device of the packet, and the target node device can receive the packet through any network port. The source node device that sends the packet needs to ensure only path reachability between an egress port through which the source node device sends the packet and a device-level port of the target node device. Similarly, a node device that forwards the packet does not need to pay attention to the packet input port of the target node device of the packet. Therefore, each node device does not need to store information about a network port of another node device other than the node device and path reachability information between network ports, but needs to store only path reachability information between the network port of the node device and a device-level port of the another node device in the routing table.

A first node device is used as an example. A routing table in the first node device stores path reachability information between a plurality of network ports of the first node device and device-level ports of a plurality of node devices in the communication system. The first node device may be any node device in the communication system.

The routing table in the first node device may include a bit table. In some embodiments, a structure of the bit table may be shown in Table 1. Each row of the bit table corresponds to a device-level port identifier of one node device in the communication system, and each column corresponds to a port identifier of one network port of the first node device. In some other embodiments, alternatively, each column of the bit table corresponds to a device-level port identifier of one node device in the communication system, and each row corresponds to a port identifier of one network port of the first node device. Each bit in the bit table indicates path reachability information between one network port and a device-level port of one node device.

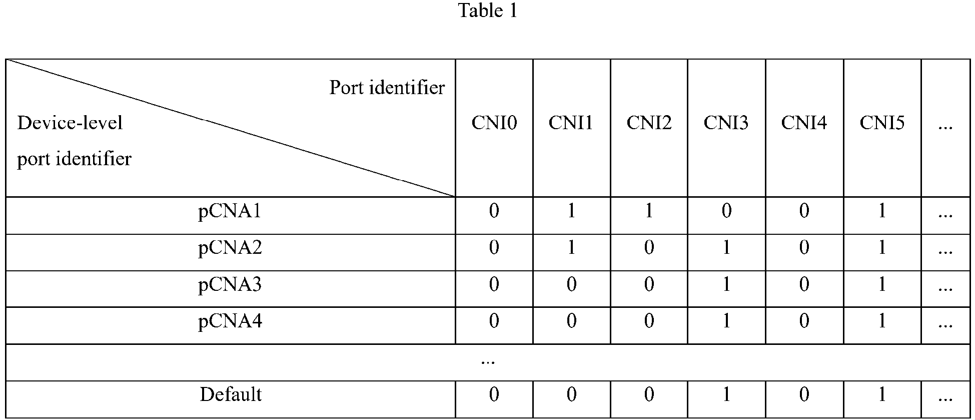

For example, it is assumed that a device-level port identifier of a device-level port of the first node device is pCNA0; device-level port identifiers of the device-level ports of the plurality of node devices other than the first node device in the UB communication system are marked as identifiers in a row of the routing table shown in Table 1, for example, the device-level port identifiers are respectively pCNA1, pCNA2, pCNA3, pCNA4, and the like; and port identifiers of the network ports of the first node device are marked as identifiers in a column of the routing table, and are used to identify the plurality of network ports of the first node device, for example, the port identifiers are respectively CNIO, CNI1, CNI2, CNI3, CNI4, CNI5, and the like. The first row of the routing table is used to record path reachability information between the plurality of network ports of the first node device and a device-level port that is of a node device and whose device-level port identifier is pCNA1. The second row is used to record path reachability information between the plurality of network ports of the first node device and a node device whose device-level port identifier is pCNA2. Each cell stores one piece of path reachability information, and each piece of path reachability information occupies only 1 bit (bit), where "0" indicates that a path between a corresponding network port and a device-level port of corresponding node device is unreachable, and "1" indicates that a path between a corresponding network port and a device-level port of a corresponding node device is reachable. For example, "0" in the first cell of the first row of the routing table indicates that a path between the network port whose port identifier is CNI0 of the first node device and the device-level port that is of the node device and whose device-level port identifier is pCNA1 is unreachable, and "1" in the second cell of the first row of the routing table indicates that a path between the network port whose port identifier is CNI1 of the first node device and the device-level port that is of the node device and whose device-level port identifier is pCNA1 is reachable. It can be seen from the first row of the routing table that, network ports with paths reachable to the device-level port that is of the node device and whose device-level port identifier is pCNA1 include a network port whose port identifier is CNI1, a network port whose port identifier is CNI2, a network port whose port identifier is CNI5, and the like. It can be seen from the second row of the routing table that, network ports with paths reachable to the device-level port that is of the node device and whose device-level port identifier is pCNA2 include a network port whose port identifier is CNI1, a network port whose port identifier is CNI2, a network port whose port identifier is CNI5, and the like.

The routing table may further include a default bit table, where each bit in the default bit table indicates path reachability information between a network port of the first node device and a device-level port that is of a node device and whose device-level port identifier is not included in the routing table. For example, "Default" in the last row of the routing table in FIG. 1 indicates the default bit table. "0" in the default bit table indicates that a corresponding network port is in a disabled state, in other words, the corresponding network port is unavailable; and "1" indicates that a corresponding network port is in an enabled state, in other words, the corresponding network port is available. When a network port is unavailable due to a fault or another reason, a corresponding default route flag in the default bit table is "0". For example, "0" in the first cell of the last row indicates that the network port whose port identifier is CNI0 is in a disabled state, and there is no reachable path between the network port whose port identifier is CNI0 and a device-level port of a default node device. The default node device includes all node devices whose device-level port identifiers are not displayed in the routing table. "1" in the fourth cell of the last row indicates that the network port whose port identifier is CNI3 is in an enabled state, and there is a reachable path between the network port whose port identifier is CNI3 and the device-level port of the default node device.

Because the node device in the UB communication system does not need to store the information about the network port of the another node device other than the node device, and does not need to maintain a large quantity of path reachability pairs between network ports, but store only the path reachability information between the network port of the node device and the device-level port of the another node device. Therefore, an amount of data stored in the routing table in the node device is small. This can reduce storage space, and reduce maintenance resources of the path reachability pairs. In addition, the routing table may further simultaneously record path reachability information between one network port and the device-level ports of the plurality of node devices by using the default bit table. This further reduces the storage space.

In the UB communication system, when sending a packet to a target node (target end node) device, any source node (initial end node) device may search, based on a device-level port identifier of the target node device, a routing table stored in the source node device for a target egress port of the packet, and output the packet through the target egress port.

In some other embodiments, each bit in the bit table also indicates path reachability information between one network port of the first node device and one network port of another node device, to be specific, each column of the bit table corresponds to a port identifier of the network port of the first node device, and each row corresponds to a port identifier of the network port of the another node device in the communication system.

In some other embodiments, some bits in the bit table may indicate path reachability information between one network port of the first node device and a device-level port of another node device, and some other bits may indicate path reachability information between one network port of the first node device and one network port of the another node device. For example, as shown in Table 2, each column of the bit table corresponds to a port identifier of a network port of the first node device, the first row of the bit table corresponds to a device-level port identifier pCNA1 of a second node device in the communication system, the second row of the bit table corresponds to a port identifier CNI21 of a network port of a third node device in the communication system, and the third row of the bit table corresponds to a port identifier CNI22 of another network port of the third node device in the communication system. "0" corresponding to a cross location of the first row and the first column indicates that a path between a network port whose port identifier is CNI0 of the first node device and a device-level port that is of the second node device and whose device-level port identifier is pCNA1 is unreachable. "1" corresponding to a cross location of the second row and the first column indicates that a path between the network port whose port identifier is CNI0 of the first node device and the network port whose port identifier is CNI21 of the third node device is reachable. "0" corresponding to a cross location of the third row and the second column indicates that a path between a network port whose port identifier is CNI1 of the first node device and the network port whose port identifier is CNI22 of the third node device is unreachable. A specific format of the routing table is not limited in this application.

**Table 2**

| | CNI0 | CNI1 | CNI2 | CNI3 | CNI4 | CNI5 | ... |
|---|---|---|---|---|---|---|---|
| pCNA1 | 0 | 1 | 1 | 0 | 0 | 1 | ... |
| CNI21 | 1 | 0 | 0 | 1 | 0 | 1 | ... |
| CNI22 | 0 | 0 | 0 | 1 | 0 | 1 | ... |
| ... | | | | | | | |

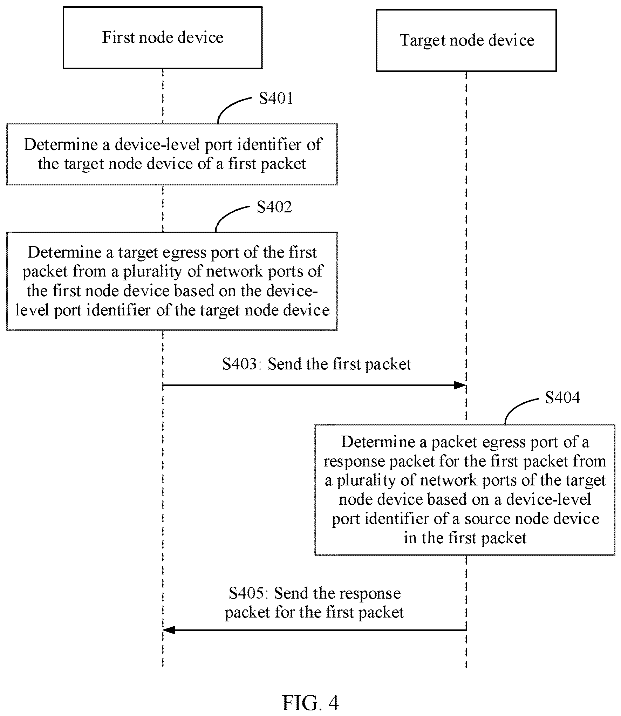

FIG. 4 is a flowchart of interaction between a first node device and a target node device in a packet transmission process. The following describes a specific packet transmission process by using an example in which the first node device sends a packet to the target node device. As shown in FIG. 4, the process may include the following steps.

S401: The first node device determines a device-level port identifier of the target node device of a first packet.

In some embodiments, the first node device may be a source node device that sends the first packet. A transport layer of the source node device may send the first packet to the target node device based on a transmission request sent by a transaction layer of the source node device. The transmission request may be a download or upload (load/store) operation request delivered by the transaction layer to the transport layer, a direct memory access (direct memory access, DMA) read/write (read/write) operation request, or the like.

The transport layer of the first node device receives the transmission request sent by the transaction layer of the first node device, and may determine the device-level port identifier of the target node device based on target node hilt (hilt) information carried in the transmission request. In some embodiments, the transmission request may carry the device-level port identifier of the target node device. In some other embodiments, the first node device stores a device-level port identifier of each node device connected to the first node device, and the hilt information carried in the transmission request may carry target address information of storage space for storing the device-level port identifier of the target node device. The transport layer of the first node device may obtain, based on the target address information carried in the hilt information, the device-level port identifier of the target node device from storage space corresponding to the target address information.

In some other embodiments, the first node device may be a switching device configured to forward the first packet. For example, the first node device may receive the first packet sent by a source node device of the first packet, and forward the first packet to the target node device. If the first node device is the switching device configured to forward the first packet, the first node device may obtain the device-level port identifier of the target node device from the first packet.

S402: The first node device determines a target egress port of the first packet from a plurality of network ports of the first node device based on the device-level port identifier of the target node device.

The target egress port of the first packet is a network port with a path reachable to a device-level port of the target node device. The first node device includes the plurality of network ports, and each network port has a port identifier. The first node device stores a routing table, and the routing table may include, as shown in Table 1, path reachability information between the plurality of network ports of the first node device and a device-level port of a node device in a communication system. The first node device may search, based on the device-level port identifier of the target node device, the routing table for a corresponding network port with a path reachable to the device-level port of the target node device, and use the corresponding network port with the path reachable to the device-level port of the target node device as a candidate network port.

For example, it is assumed that the device-level port identifier of the target node device is pCNA2. The first node device searches the routing table for a corresponding network port with a path reachable to pCNA2, determines that paths between network ports whose port identifiers are CNI1, CNI3, and CNI5 and the device-level port pCNA2 of the target node device are reachable, and uses the network ports whose port identifiers are CNI1, CNI3, and CNI5 as candidate network ports.

In some embodiments, if the first node device does not find the device-level port identifier of the target node device in the routing table, the first node device may determine, based on a default bit table in the routing table, a candidate network port with a path reachable to the device-level port of the target node device. "1" in the default bit table indicates that all paths between a corresponding network port and device-level ports of all node devices whose device-level port identifiers are not displayed in the routing table are reachable. For example, it is assumed that the device-level port identifier of the target node device is pCNA10, and the routing table shown in Table 1 does not include the device-level port identifier. In this case, a corresponding candidate network port with a path reachable to pCNA10 may be determined by using the default bit table in the last row of the routing table. It can be learned from Table 1 that candidate network ports with reachable paths corresponding to pCNA10 include network ports whose port identifiers are CNI3 and CNI5.

After determining the candidate network port, the first node device may determine the target egress port of the first packet from the candidate network port. In some embodiments, if only one candidate network port determined from the plurality of network ports is included, the first node device may use the candidate network port as the target egress port of the first packet. In some other embodiments, if a plurality of candidate network ports determined from the plurality of network ports are included, the first node device may select at least one candidate network port from the plurality of candidate network ports as the target egress port of the first packet based on load information of the plurality of candidate network ports. For example, in an embodiment, the first node device may select a candidate network port with a minimum load from the plurality of candidate network ports as the target egress port of the first packet according to a load balancing policy. For example, it is assumed that in the three candidate network ports whose port identifiers are CNI1, CNI3, and CNI5, a load of the candidate network port whose port identifier is CNI5 is less than a load of the candidate network port whose port identifier is CNI1 and a load of the candidate network port whose port identifier is CNI3. In this case, the candidate network port whose port identifier is CNI5 may be used as the target egress port of the first packet. In another embodiment, the first node device may select, as the target egress port of the first packet from the plurality of candidate network ports according to a load balancing policy, one or more candidate network ports whose load is less than or equal to a specified load threshold. For example, it is assumed that loads of the three candidate network ports whose port identifiers are CNI1, CNI3, and CNI5 are all less than or equal to the specified load threshold. In this case, the three candidate network ports whose port identifiers are CNI1, CNI3, and CNI5 may all be used as target egress ports of the first packet. In another embodiment, the first node device may sort the plurality of candidate network ports in ascending order of loads based on load information of the plurality of candidate network ports, and select, as target egress ports of the first packet, a plurality of candidate network ports with a specified quantity or a specified proportion that are arranged first. For example, it is assumed that the specified quantity is 2, and after the three candidate network ports whose port identifiers are CNI1, CNI3, and CNI5 are sorted in ascending order of loads, a sequence is CNI5, CNI1, and CNI3. In this case, the two candidate network ports that are arranged first, namely, the candidate network ports whose port identifiers are CNI5 and CNI1, may be used as target egress ports of the first packet.

In an optional embodiment, after determining the candidate network port, the first node device may further control, based on congestion information of the candidate network port, a frequency of sending a packet to the target node device, to reduce network congestion.

S403: The first node device sends the first packet to the target node device.

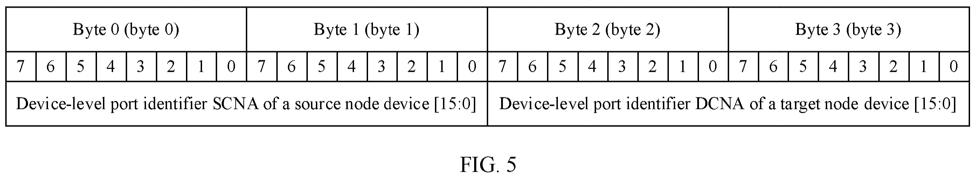

The first node device sends the first packet to the target node device through the target egress port of the first packet. The first packet carries a device-level port identifier (src_pCNA, SCNA) of the source node device and the device-level port identifier (dst_pCNA, DCNA) of the target node device. The device-level port identifier of the target node device indicates, to a node device that forwards the first packet, the target node device of the first packet, and the device-level port identifier of the source node device indicates, to the target node device, the source node device that sends the first packet. For example, as shown in FIG. 5, the device-level port identifier SCNA of the source node device and the device-level port identifier DCNA of the target node device may be encapsulated in a header of the first packet. The SCNA may occupy 2 bytes (bytes) in the first packet, and the DCNA may also occupy 2 bytes in the first packet. Each byte includes a total of 8 bits (bits) from 0 to 7.

The packet carries the device-level port identifier of the source node device and the device-level port identifier of the target node device, instead of carrying a port identifier of a network port, so that a plurality of network ports of the source node device that sends the packet and a plurality of network ports of the target node device that receives the packet can be effectively and automatically used, to implement a multi-path selection mechanism and multi-path communication.

In some embodiments, the first node device may be the source node device that sends the first packet, and the device-level port identifier of the source node device in the first packet may be a device-level port identifier of the first node device. The first node device may directly send the first packet to the target node device through the target egress port of the first packet. Alternatively, the first packet may be sent to a switching device through the target egress port of the first packet, and the switching device forwards the first packet to the target node device. The switching device may select, based on the device-level port identifier of the target node device carried in the first packet, a target egress port from a plurality of network ports included in the switching device, to forward the packet.

In some other embodiments, the first node device may be the switching device that forwards the first packet. The first node device may directly forward the first packet to the target node device through the target egress port that is of the first packet and that is determined in the foregoing process. Alternatively, the first packet may be forwarded to another switching device through the target egress port that is of the first packet and that is determined in the foregoing process, and the another switching device forwards the first packet to the target node device.

To more effectively use bandwidths of the plurality of network ports, and further balance bandwidth loads of the network ports, in some embodiments, if a plurality of target egress ports of the first packet are included, and a length of the first packet is greater than a specified length, the first node device may split the first packet into a plurality of packets, and separately send the plurality of packets to the target node device through the plurality of target egress ports. The specified length may be a length of a data packet transmitted on a packet transmission link. For example, in an embodiment, if the target egress port of the first packet includes three network ports, the first packet may be split into three packets, and the three packets are separately sent through the three target egress ports. Each target egress port is configured to send one packet.

In the foregoing method, the plurality of target egress ports may be used to jointly send the first packet, to implement multi-path load sharing, and further implement load balancing of the plurality of network ports.

S404: The target node device determines a packet egress port of a response packet for the first packet from the plurality of network ports of the target node device based on the device-level port identifier of the source node device in the first packet.

The target node device may receive the first packet through any network port of the target node device, obtain the device-level port identifier of the source node device in the first packet, and determine the packet egress port of the response packet for the first packet from the plurality of network ports of the target node device based on the device-level port identifier of the source node device in the first packet.

A process in which the target node device determines the packet egress port of the response packet for the first packet from the plurality of network ports is the same as the process in which the first node device determines the target egress port of the first packet in step S402. Details are not described herein again.

S405: The target node device sends the response packet for the first packet to the first node device.

The target node device may send the response packet for the first packet to the first node device through the packet egress port of the response packet. In some embodiments, if the first node device is the source node device of the first packet, the target node device may directly send the response packet for the first packet to the first node device through the packet egress port of the response packet. Alternatively, the response packet for the first packet may be sent to a switching device through the packet egress port of the response packet, and the switching device forwards the response packet for the first packet to the first node device. In some embodiments, if the first node device is the switching device that forwards the first packet, the target node device may send the response packet for the first packet to the first node device through the packet egress port of the response packet, and the first node device forwards the response packet for the first packet to the source node device of the first packet.

The packet transmission method provided in this embodiment of this application may be applied to a UB communication system. The UB communication system may include a plurality of node devices, and a part or all of the node devices each may have a plurality of network ports. Each node device has a device-level port identifier, and each network port includes a port identifier. Each node device stores a routing table, and the routing table stores path reachability information between a plurality of network ports of the node device and a device-level port of another node device other than the node device in the communication system. When the first node device sends the packet, the transport layer may search for the routing table based on the device-level port identifier of the target node device of the packet, select the target egress port of the packet from the plurality of network ports of the first node device, and send the packet through the target egress port of the packet. The plurality of network ports participate in the path selection mechanism, so that multi-path communication can be implemented. In addition, when selecting the target egress port, the transport layer may implement load balancing according to the load balancing policy.

In this embodiment of this application, each node device does not need to store information about a network port of another node device other than the node device and path reachability information between network ports, but needs to store only path reachability information between a network port of the node device and a device-level port of the another node device in the routing table. Therefore, an amount of data stored in the routing table in the node device is small. This can reduce storage space. In addition, when the target egress port is selected from the plurality of network ports, an amount of data that needs to be traversed by the node device is also small. This can reduce computing resources of the node device.

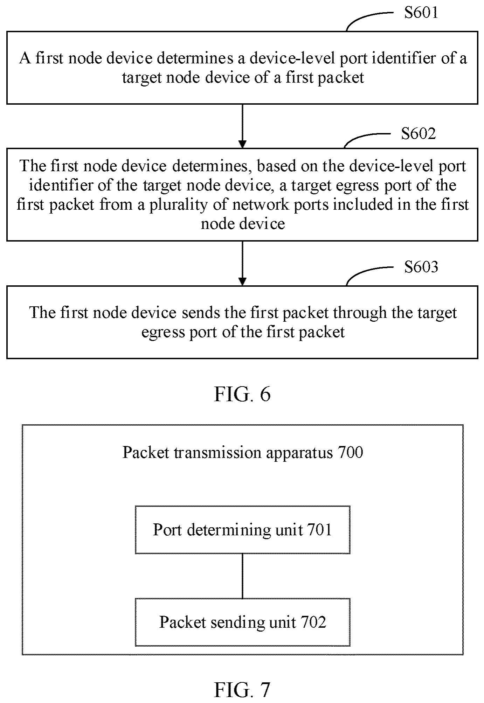

Based on a same technical concept as the foregoing embodiment, an embodiment of this application provides a packet transmission method. The method may be applied to a first node device in a communication system. The first node device may be any node device in the communication system, and the first node device includes a plurality of network ports. For example, the first node device may be the node device 100 shown in FIG. 3. FIG. 6 is a flowchart of a packet transmission method according to an embodiment of this application. As shown in FIG. 6, the method may include the following steps.

S601: A first node device determines a device-level port identifier of a target node device of a first packet.

The first node device may be a source node device that sends the first packet, or the first node device may be a switching device configured to forward the first packet.

S602: The first node device determines, based on the device-level port identifier of the target node device, a target egress port of the first packet from a plurality of network ports included in the first node device.

The target egress port of the first packet is a network port with a path reachable to a device-level port of the target node device.

In some embodiments, each of the plurality of network ports of the first node device has a port identifier. The first node device stores a routing table, and the routing table stores path reachability information between the plurality of network ports of the first node device and device-level ports of a plurality of node devices in a communication system. The first node device may search, based on the device-level port identifier of the target node device, the routing table for a corresponding candidate network port with a path reachable to the device-level port of the target node device, and determine the target egress port of the first packet from the candidate network port.

For example, if a plurality of candidate network ports are included, the first node device may select at least one candidate network port from the plurality of candidate network ports as the target egress port of the first packet based on load information of the plurality of candidate network ports.

In some embodiments, if the device-level port identifier of the target node device is not found in the routing table, the first node device may determine, based on a default bit table in the routing table, the corresponding candidate network port with the path reachable to the device-level port of the target node device. The default bit table indicates path reachability information between the plurality of network ports of the first node device and a device-level port that is of a node device and whose device-level port identifier is not included in the routing table.

S603: The first node device sends the first packet through the target egress port of the first packet.

In some embodiments, if a plurality of target egress ports of the first packet are included, and a length of the first packet is greater than a specified length, the first node device may split the first packet into a plurality of packets, and separately send the plurality of split packets to the target node device through the plurality of target egress ports.

The first packet carries a device-level port identifier of a source node device and the device-level port identifier of the target node device. The device-level port identifier of the target node device indicates, to a node device that forwards the first packet, the target node device of the first packet, and the device-level port identifier of the source node device indicates, to the target node device, the source node device that sends the first packet.

In some embodiments, after sending the first packet through the target egress port of the first packet, the first node device may further receive a response packet that is for the first packet and that is sent by the target node device. The response packet is sent by the target node device through a packet egress port of the response packet, the packet egress port of the response packet is determined by the target node device from a plurality of network ports included in the target node device based on the device-level port identifier of the source node device in the first packet, and the device-level port identifier of the target node device carried in the response packet is the device-level port identifier of the source node device in the first packet.

According to the packet transmission method provided in this embodiment of this application, when sending the first packet, the first node device may determine the device-level port identifier of the target node device of the first packet, and determine, based on the device-level port identifier of the target node device, the target egress port of the first packet from the plurality of network ports. In the foregoing process, the plurality of network ports participate in a path selection mechanism, so that multi-path communication can be implemented, bandwidth loads of the plurality of network ports can be balanced, communication efficiency can be improved, and communication performance can be improved.

Based on a same technical concept as the foregoing embodiment, an embodiment of this application further provides a packet transmission apparatus. The packet transmission apparatus may be used in a first node device in a communication system, and the first node device may be any node device in the communication system. The packet transmission apparatus may be configured to implement functions of the method embodiment shown in FIG. 6. Therefore, the packet transmission apparatus can implement the beneficial effect of the foregoing method embodiment.

As shown in FIG. 7, a packet transmission apparatus 700 may include a port determining unit 701 and a packet sending unit 702. When the packet transmission apparatus 700 is configured to implement functions of the method embodiment shown in FIG. 6, the port determining unit 701 may be configured to perform S601 and S602, and the packet sending unit 702 may be configured to perform S603. For example, the port determining unit 701 is configured to: determine a device-level port identifier of a target node device of a first packet; and determine a target egress port of the first packet from a plurality of network ports based on the device-level port identifier of the target node device, where the target egress port of the first packet is a network port with a path reachable to a device-level port of the target node device; and the packet sending unit 702 is configured to send the first packet through the target egress port of the first packet. Both the port determining unit 701 and the packet sending unit 702 may be implemented by using software, or may be implemented by using hardware.

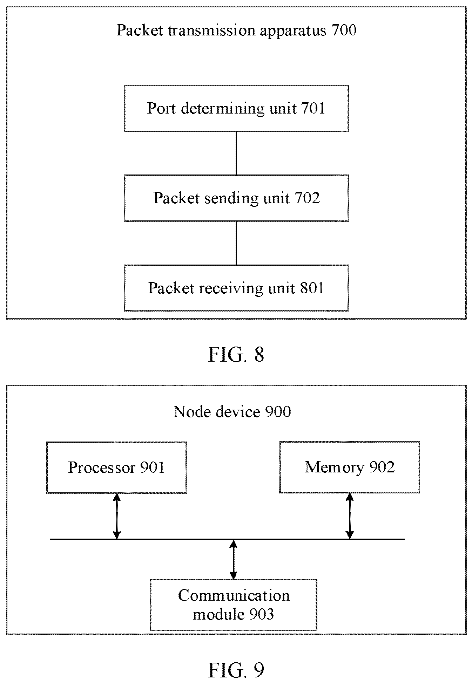

In some embodiments, as shown in FIG. 8, the packet transmission apparatus 700 may further include a packet receiving unit 801. The packet receiving unit 801 is configured to receive a response packet that is for the first packet and that is sent by the target node device, where the response packet is sent by the target node device through a packet egress port of the response packet, the packet egress port of the response packet is determined by the target node device from a plurality of network ports included in the target node device based on a device-level port identifier of a source node device in the first packet, and the device-level port identifier of the target node device carried in the response packet is the device-level port identifier of the source node device in the first packet.

It should be noted that, in another embodiment, the port determining unit 701, the packet sending unit 702, and the packet receiving unit 801 may be configured to perform any step in the packet transmission method, steps that the port determining unit 701, the packet sending unit 702, and the packet receiving unit 801 are responsible for implementing may be specified based on a requirement, and the port determining unit 701, the packet sending unit 702, and the packet receiving unit 801 separately implement different steps in the packet transmission method to implement all functions of the packet transmission apparatus.

Based on a same technical concept as the foregoing method embodiment, an embodiment of this application further provides a node device. The node device may be any node device in a communication system, may be an end node device, or may be a switching device. The node device may be the foregoing first node device, and may be configured to implement functions of the method embodiment shown in FIG. 6. Therefore, the node device can implement the beneficial effect of the foregoing method embodiment.

In some embodiments, a structure of a node device 900 may be shown in FIG. 9, including a processor 901 and a memory 902 connected to the processor 901, and further including a communication module 903. The communication module 903 may include one device-level port and a plurality of network ports, and there is a binding relationship between the device-level port and the plurality of network ports. The processor 901, the memory 902, and the communication module 903 may be connected to each other through a bus. The communication module 903 is configured to perform packet transmission with another node device in the communication system.

The processor 901 may be used as a main processor of the node device 900, that is, a control core of the node device 900. The bus may be a peripheral component interconnect (peripheral component interconnect, PCI) bus, an extended industry standard architecture (extended industry standard architecture, EISA) bus, or the like. Buses may be classified into an address bus, a data bus, a control bus, and the like. In embodiments of this application, a specific connection medium among the processor 901, the memory 902, and the communication module is not limited.

The memory 902 may be a volatile memory, for example, a random access memory. Alternatively, the memory may be a non-volatile memory, for example, a read-only memory ROM, a flash memory, a hard disk drive (hard disk drive, HDD), or a solid-state drive (solid-state drive, SSD). Alternatively, the memory 902 is any other medium that can be used to carry or store expected program code in a form of an instruction or a data structure and that can be accessed by a computer, but is not limited thereto. The memory 902 may be a combination of the foregoing memories. The memory 902 may be configured to store a software program and a module.

The processor 901 may include one or more processors. The processor 901 runs the software program and the module that are stored in the memory 902, to perform various function applications and data processing of the node device 900, for example, select a target egress port of a packet from a plurality of network ports according to the packet transmission method provided in embodiments of this application.

It may be understood that, the structure illustrated in this embodiment of this application does not constitute a specific limitation on a send device. In some other embodiments of this application, the send device may include more or fewer components than those shown in the figure, combine some components, split some components, or have different component arrangements. The components shown in the figure may be implemented by hardware, software, or a combination of software and hardware.

An embodiment of this application further provides a communication system. The communication system may include a plurality of node devices. A diagram of a structure of the communication system may be shown in FIG. 1 or FIG. 2. Each node device in the communication system has a device-level port and a plurality of network ports. The device-level port has a device-level port identifier, and each network port has a port identifier. In some embodiments, a first node device in the communication system determines a device-level port identifier of a target node device of a first packet, determines a target egress port of the first packet from the plurality of network ports of the first node device based on the device-level port identifier of the target node device, and sends the first packet through the target egress port of the first packet. The target egress port of the first packet is a network port with a path reachable to the device-level port of the target node device. After receiving the first packet, the target node device determines, based on a device-level port identifier of a source node device in the first packet, a packet egress port of a response packet for the first packet from the plurality of network ports included in the target node device, and sends the response packet through the packet egress port of the response packet. In the foregoing process, the target egress port is selected from the plurality of network ports based on the device-level port identifier of the node device, and the plurality of network ports participate in a path selection mechanism, so that multi-path communication can be implemented, bandwidth loads of the plurality of network ports can be balanced, communication efficiency can be improved, and communication performance can be improved.

The method steps in embodiments of this application may be implemented by hardware, or may be implemented by a processor by executing a computer program or instructions. The computer program or the instructions may constitute a computer program product.

An embodiment of this application further provides a computer program product, including computer-executable instructions. In an embodiment, the computer-executable instructions are used to enable a computer to perform a function in the method embodiment shown in FIG. 6.

The computer-executable instructions may be stored in a computer-readable storage medium. An embodiment of this application further provides a computer-readable storage medium, and the computer-readable storage medium stores computer-executable instructions. In an embodiment, the computer-executable instructions are used to enable a computer to perform a function in the method embodiment shown in FIG. 6.

The computer-readable storage medium provided in this embodiment of this application may be a random access memory (random access memory, RAM), a flash memory, a ROM, a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of computer-readable storage medium well-known in the art.

The computer-executable instructions may be stored in the computer-readable storage medium, or may be transmitted from a computer-readable storage medium to another computer-readable storage medium. For example, a computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc (digital video disc, DVD), or may be a semiconductor medium, for example, a solid-state disk.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", or any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that fall within the scope of this application.

It is clear that a person skilled in the art can make various modifications and variations to this application without departing from the scope of this application. In this way, this application is intended to cover these modifications and variations of embodiments of this application provided that they fall within the scope of protection defined by the following claims and their equivalent technologies.

## Claims

1. A packet transmission method, applied to a first node device, wherein the first node device is one of a plurality of node devices comprised in a serial bus communication system, the first node device is configured to send a first packet to a target node device, the first node device and the target node device each comprise one device-level port and a plurality of network ports, and there is a binding relationship between the device-level port of the target node device and the plurality of network ports of the target node device; and the method comprises:
determining a device-level port identifier of the target node device of the first packet;
determining a target egress port of the first packet from the plurality of network ports of the first node device based on the device-level port identifier of the target node device, wherein the target egress port of the first packet is a network port with a path reachable to the device-level port of the target node device; and
sending the first packet through the target egress port of the first packet.

2. The method according to claim 1, wherein the determining the target egress port of the first packet from the plurality of network ports of the first node device based on the device-level port identifier of the target node device comprises:
searching, based on the device-level port identifier of the target node device, a routing table for a corresponding candidate network port with a path reachable to the device-level port of the target node device, wherein the routing table stores path reachability information between the plurality of network ports of the first node device and device-level ports of the plurality of node devices in the serial bus communication system; and
determining the target egress port of the first packet from the candidate network port.

3. The method according to claim 2, wherein each of the plurality of network ports of the first node device has a port identifier;
the routing table comprises a bit table, wherein each row of the bit table corresponds to a port identifier of one network port, and each column corresponds to a device-level port identifier of one node device; or each row of the bit table corresponds to a device-level port identifier of one node device, and each column corresponds to a port identifier of one network port; and
each bit in the bit table indicates path reachability information between one network port and a device-level port of one node device.

4. The method according to claim 3, wherein the routing table further comprises a default bit table, and each bit in the default bit table indicates path reachability information between a network port of the first node device and a device-level port that is of a node device and whose device-level port identifier is not comprised in the routing table; and the searching, based on the device-level port identifier of the target node device, the routing table for the corresponding candidate network port with the path reachable to the device-level port of the target node device comprises:
if the device-level port identifier of the target node device is not found in the routing table, determining, based on the default bit table in the routing table, the corresponding candidate network port with the path reachable to the device-level port of the target node device.

5. The method according to any one of claims 2 to 4, wherein the determining the target egress port of the first packet from the candidate network port comprises:
if a plurality of candidate network ports are comprised, selecting at least one candidate network port from the plurality of candidate network ports as the target egress port of the first packet based on load information of the plurality of candidate network ports.

6. The method according to any one of claims 2 to 5, wherein after the searching the routing table for the corresponding candidate network port with the path reachable to the device-level port of the target node device, the method further comprises:
controlling, based on congestion information of the candidate network port, a frequency of sending a packet to the target node device.

7. The method according to any one of claims 1 to 6, wherein the sending the first packet through the target egress port of the first packet comprises:
if a plurality of target egress ports of the first packet are comprised, and a length of the first packet is greater than a specified length, splitting the first packet into a plurality of packets; and
separately sending the plurality of packets to the target node device through the plurality of target egress ports.

8. The method according to any one of claims 1 to 7, wherein the first packet carries a device-level port identifier of a source node device and the device-level port identifier of the target node device, the device-level port identifier of the target node device indicates, to a node device that forwards the first packet, the target node device of the first packet, and the device-level port identifier of the source node device indicates, to the target node device, the source node device that sends the first packet.

9. The method according to claim 8, wherein after the sending the first packet through the target egress port of the first packet, the method further comprises:
receiving a response packet that is for the first packet and that is sent by the target node device, wherein the response packet is sent by the target node device through a packet egress port of the response packet, the packet egress port of the response packet is determined by the target node device from the plurality of network ports of the target node device based on the device-level port identifier of the source node device in the first packet, and the device-level port identifier of the target node device carried in the response packet is the device-level port identifier of the source node device in the first packet.

10. A packet transmission method, applied to a serial bus communication system, wherein the serial bus communication system comprises a plurality of node devices, a first node device in the plurality of node devices is configured to send a first packet to a target node device, the first node device and the target node device each comprise one device-level port and a plurality of network ports, and there is a binding relationship between the device-level port of the target node device and the plurality of network ports of the target node device; and the method comprises:
determining, by the first node device, a device-level port identifier of the target node device of the first packet;
determining, by the first node device, a target egress port of the first packet from the plurality of network ports of the first node device based on the device-level port identifier of the target node device, and sending the first packet to the target node device through the target egress port, wherein the target egress port of the first packet is a network port with a path reachable to the device-level port of the target node device, and the first packet carries a device-level port identifier of a source node device; and
after receiving the first packet, determining, by the target node device, a packet egress port of a response packet for the first packet from the plurality of network ports of the target node device based on the device-level port identifier of the source node device in the first packet, and sending the response packet through the packet egress port of the response packet.

11. The method according to claim 10, wherein the determining, by the first node device, the target egress port of the first packet from the plurality of network ports of the first node device based on the device-level port identifier of the target node device comprises:
searching, by the first node device based on the device-level port identifier of the target node device, a routing table for a corresponding candidate network port with a path reachable to the device-level port of the target node device, wherein the routing table stores path reachability information between the plurality of network ports of the first node device and device-level ports of the plurality of node devices in the serial bus communication system; and
determining, by the first node device, the target egress port of the first packet from the candidate network port.

12. The method according to claim 11, wherein each of the plurality of network ports of the first node device has a port identifier;
the routing table comprises a bit table, wherein each row of the bit table corresponds to a port identifier of one network port, and each column corresponds to a device-level port identifier of one node device; or each row of the bit table corresponds to a device-level port identifier of one node device, and each column corresponds to a port identifier of one network port; and
each bit in the bit table indicates path reachability information between one network port and a device-level port of one node device.

13. The method according to claim 12, wherein the routing table further comprises a default bit table, and each bit in the default bit table indicates path reachability information between a network port of the first node device and a device-level port that is of a node device and whose device-level port identifier is not comprised in the routing table; and the searching, by the first node device based on the device-level port identifier of the target node device, the routing table for the corresponding candidate network port with the path reachable to the device-level port of the target node device comprises:
if the first node device does not find the device-level port identifier of the target node device in the routing table, determining, by the first node device based on the default bit table in the routing table, the corresponding candidate network port with the path reachable to the device-level port of the target node device.

14. The method according to any one of claims 11 to 13, wherein the determining, by the first node device, the target egress port of the first packet from the candidate network port comprises:
if a plurality of candidate network ports are comprised, selecting, by the first node device, at least one candidate network port from the plurality of candidate network ports as the target egress port of the first packet based on load information of the plurality of candidate network ports.

15. The method according to any one of claims 11 to 14, wherein the method further comprises:
after the first node device searches the routing table for the corresponding candidate network port with the path reachable to the device-level port of the target node device, controlling, by the first node device based on congestion information of the candidate network port, a frequency of sending a packet to the target node device.

16. The method according to any one of claims 10 to 15, wherein the sending, by the first node device, the first packet to the target node device through the target egress port of the first packet comprises:
if a plurality of target egress ports of the first packet are comprised, and a length of the first packet is greater than a specified length, splitting, by the first node device, the first packet into a plurality of packets; and separately sending the plurality of packets to the target node device through the plurality of target egress ports.

17. A packet transmission apparatus, used in a first node device, wherein the first node device is one of a plurality of node devices comprised in a serial bus communication system, the first node device is configured to send a first packet to a target node device, the first node device and the target node device each comprise one device-level port and a plurality of network ports, and there is a binding relationship between the device-level port of the target node device and the plurality of network ports of the target node device; and the apparatus comprises:
a port determining unit, configured to: determine a device-level port identifier of the target node device of the first packet; and determine a target egress port of the first packet from the plurality of network ports of the first node device based on the device-level port identifier of the target node device, wherein the target egress port of the first packet is a network port with a path reachable to the device-level port of the target node device; and
a packet sending unit, configured to send the first packet through the target egress port of the first packet.

18. The apparatus according to claim 17, wherein the port determining unit is specifically configured to:
search, based on the device-level port identifier of the target node device, a routing table for a corresponding candidate network port with a path reachable to the device-level port of the target node device, wherein the routing table stores path reachability information between the plurality of network ports of the first node device and device-level ports of the plurality of node devices in the serial bus communication system; and
determine the target egress port of the first packet from the candidate network port.

19. The apparatus according to claim 18, wherein each of the plurality of network ports of the first node device has a port identifier;
the routing table comprises a bit table, wherein each row of the bit table corresponds to a port identifier of one network port, and each column corresponds to a device-level port identifier of one node device; or each row of the bit table corresponds to a device-level port identifier of one node device, and each column corresponds to a port identifier of one network port; and
each bit in the bit table indicates path reachability information between one network port and a device-level port of one node device.

20. The apparatus according to claim 18 or 19, wherein the port determining unit is specifically configured to:
if a plurality of candidate network ports are comprised, select at least one candidate network port from the plurality of candidate network ports as the target egress port of the first packet based on load information of the plurality of candidate network ports.

21. The apparatus according to any one of claims 17 to 20, wherein the first packet carries a device-level port identifier of a source node device and the device-level port identifier of the target node device, the device-level port identifier of the target node device indicates, to a node device that forwards the first packet, the target node device of the first packet, and the device-level port identifier of the source node device indicates, to the target node device, the source node device that sends the first packet.

22. The apparatus according to claim 21, wherein the apparatus further comprises a packet receiving unit, wherein
the packet receiving unit is configured to receive a response packet that is for the first packet and that is sent by the target node device, wherein the response packet is sent by the target node device through a packet egress port of the response packet, the packet egress port of the response packet is determined by the target node device from the plurality of network ports comprised in the target node device based on the device-level port identifier of the source node device in the first packet, and the device-level port identifier of the target node device carried in the response packet is the device-level port identifier of the source node device in the first packet.

23. A node device, comprising a memory and a processor, wherein the memory stores a computer program that can run on the processor, and when the computer program is executed by the processor, the processor is enabled to implement the method according to any one of claims 1 to 9.

24. A communication system, comprising a plurality of node devices, wherein the node device is the node device according to claim 23.

25. A computer-readable storage medium, storing computer-executable instructions, wherein the computer-executable instructions are used to enable a computer to perform the method according to any one of claims 1 to 9.

26. A computer program product, comprising computer-executable instructions wherein the computer-executable instructions are used to enable a computer to perform the method according to any one of claims 1 to 9.
